# FASCICULE DE BREVET EUROPEEN

(11) **EP 3 535 140 B1**
(45) Date de publication et mention de la délivrance du brevet: **02.03.2022**
(21) Numéro de dépôt: 17804234.7
(22) Date de dépôt: 31.10.2017
(51) Int. Cl.: B60C 11/12, B60C 11/04, B60C 11/03

(54) **BANDE DE ROULEMENT COMPORTANT UN BLOC ALLONGE PRESENTANT UNE PLURALITE DE DECOUPURES**
LAUFFLÄCHE MIT EINEM LANGEN PROFILBLOCK MIT EINER VIELZAHL VON AUSSCHNITTEN
TREAD COMPRISING A LONG TREAD BAR HAVING A PLURALITY OF CUT-OUTS

(30) Priorité: 03.11.2016 FR 1660633
(43) Date de publication de la demande: 11.09.2019
(73) Titulaire: Compagnie Générale des Etablissements Michelin, 63000 Clermont-Ferrand (FR)
(72) Inventeur: DURAND-GASSELIN, Benoit, 63040 Clermont-Ferrand Cedex 9 (FR); MUHLHOFF, Olivier, 63040 Clermont-Ferrand Cedex 9 (FR); BOURGEOIS, Frédéric, 63040 Clermont-Ferrand Cedex 9 (FR)
(74) Mandataire: Le Cam, Stéphane Georges Elie
(86) Numéro de dépôt international: PCT/FR2017/052999
(87) Numéro de publication internationale: WO 2018/083416

(56) Documents cités:
- EP-A1- 0 282 765
- EP-A2- 1 437 237
- WO-A1-2011/098401
- WO-A1-2012/043036
- WO-A2-99/65814
- FR-E- 43 383
- JP-A- 2002 225 512
- US-A1- 2005 092 413

## Description

### DOMAINE DE L'INVENTION

La présente invention concerne une bande de roulement d'un pneumatique pour véhicule automobile pourvu de moyens pour réduire de façon sensible le bruit en roulage.

### ETAT DE LA TECHNIQUE

Une bande de roulement d'un pneumatique comporte de manière connue un ensemble de découpes dont l'objectif est d'améliorer l'adhérence du pneumatique, en particulier sur sol mouillé. De telles découpures sont des rainures et/ou des incisions.

Il est également connu que la présence de découpures dans une bande de roulement peut être source de bruit lié entre autres à des vibrations de l'air circulant dans les rainures, notamment dans la zone de contact avec la chaussée ou à une répartition non optimale des incisions lors du roulage.

Avec le développement de véhicules de plus en plus silencieux, en particuliers les véhicules électriques, un tel bruit devient gênant.

Une solution est proposée par le document WO2015067644, qui divulgue une bande de roulement comportant une pluralité de découpures agencées de manière à limiter le bruit pouvant être généré par ces découpures.

Cependant, il a été constaté que dans certaines conditions de roulage, les blocs en matériau caoutchoutique comportant de telles découpures s'usent de façon irrégulière en forme de dents de scie.

Cette usure irrégulière peut dégrader les performances du pneu et en particulier en réduction de bruit. D'autres exemples pertinents de bande de roulement sont montrés dans les documents EP 0 282 765 A1, JP 2002 225512 A, WO 2012/043036 A1, WO 99/65814 A2, WO 2011/098401 A1, FR 43 383 E, US 2005/092413 A1, EP 1 437 237 A2 et WO 2017/112504 A1.

L'invention a donc pour objectif de limiter le bruit généré lors du roulage du pneumatique pendant toute sa durée de fonctionnement.

### DEFINITIONS

Dans la description suivante on s'attache aux définitions suivantes :
- Par « **pneumatique** », on entend tous les types de bandages élastiques soumis à une pression interne ou non.
- Par « **bande de roulement** » d'un pneumatique, on entend une quantité de matériau caoutchoutique délimitée par des surfaces latérales et par deux surfaces principales dont l'une est destinée à entrer en contact avec une chaussée lorsque le pneumatique roule.
- Par « **surface de la bande de roulement** », on entend l'ensemble des points de la bande de roulement qui sont en contact avec la chaussée lorsque le pneumatique, gonflé à sa pression de référence roule sur cette chaussée. La pression de gonflage de référence est définie dans les conditions d'utilisation du pneumatique telles que définies notamment par la norme E.T.R.T.O (« European Tyre and Rim Technical Organisation »). La largeur C de la surface de la bande de roulement est notamment définie par la norme ETRTO tel que C= (1.075-0.005ar)*S1.001 avec ar le rapport nominal d'aspect et s la grosseur du boudin théorique sur une jante de mesure.
- Par « **bloc** » sur une bande de roulement, on entend un élément en relief délimité par des rainures et comprenant des parois latérales et une face de contact, cette dernière étant destinée à venir en contact avec le sol au cours d'un roulage.
- Par « **bloc allongé** », on entend un bloc présentant une largeur et une longueur sur la circonférence du pneumatique, cette longueur étant très supérieure à la largeur.
- Par « **rainure** », on entend une découpure dans la bande de roulement délimitant des parois de matière, la largeur, correspondant à l'espacement entre les parois de cette découpure est telle que les parois associées à cette découpure ne peuvent pas venir en contact l'une contre l'autre dans des conditions usuelles de roulage. La largeur pour une rainure est supérieure à 2 millimètres.
- Par « **incision** », on entend une découpure dans la bande de roulement délimitant des parois de matière, la largeur correspondant à l'espacement entre les parois de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.
- Par « **découpure** », on entend une rainure ou une incision.
- Par « **direction transversale** » ou « direction axiale », on entend une direction parallèle à l'axe de rotation du pneu.
- Par « **direction circonférentielle** », on entend une direction qui est tangente à tout cercle centré sur l'axe de rotation du pneumatique. Cette direction est perpendiculaire à la direction axiale.
- Par « **direction oblique** », on entend une direction qui possède une composante axiale et une composante circonférentielle non nulles.
- Par « **niveau circonférentiel** », on entend un ensemble de points formant une droite, cette droite étant perpendiculaire à la direction circonférentielle.

### RESUME DE L'INVENTION

L'invention porte sur une bande de roulement pour pneumatique selon la revendication 1.

Par profondeur de la bande de roulement on entend la profondeur mesurée suivant une coupe circonférentielle le long de cette bande de roulement.

La direction normale à la surface de la bande de roulement est définie par un plan radian (appelé aussi plan radial) passant par le centre de la découpure.

En d'autres termes, l'angle d'inclinaison α représente l'inclinaison d'un plan médian de la découpure par rapport à un plan radiant passant par ladite découpure, mesuré sur une coupe circonférentielle.

Par plan médian on entend un plan situé entre les parois d'une découpure et séparant ladite découpure en deux parties identiques.

L'invention propose ainsi, d'une part, d'assurer une continuité dans l'organisation des découpures dans le bloc allongé. En effet, lorsqu'une découpure atteint une de ses extrémités, une autre découpure débute à un même niveau circonférentiel. De cette manière, on limite la variation du taux d'entaillement selon la direction circonférentielle dans le bloc allongé et les performances acoustiques du pneumatique sont alors améliorées.

D'autre part, l'invention propose d'incliner les découpures d'un angle α par rapport à la normale à la surface de contact, ce qui permet de réduire l'usure en dents de scie de la bande de roulement.

Chaque paire de découpures successives forme un sous-bloc de matière de la bande de roulement. Lors d'un roulage du pneumatique, chaque sous-bloc passe par une phase de forte pression de contact avec le sol, puis par une phase dite d'échappement dans laquelle la pression de contact diminue, juste avant que le sous-bloc quitte le sol. Dans cette phase d'échappement une portion de chaque sous-bloc glisse sur le sol, ce qui engendre une usure de cette portion. La portion opposée n'est pas sujette à ce phénomène car en entrée en contact avec la chaussée, elle se pose sans glissement, donc sans usure. Ainsi, il en résulte une usure irrégulière en dent de scie de chaque sous-bloc de la bande de roulement.

L'inclinaison des découpures, selon l'angle a, permet de retarder le glissement des sous-blocs de la bande de roulement. En d'autres termes, la longueur de la portion du sous-bloc qui est sujette au glissement devient moins importante. En conséquence, l'usure des sous-blocs en forme de dents de scie est également réduite. Cette usure est particulièrement améliorée lorsque dans l'air de contact entre le pneumatique et la chaussée, l'incision est orientée dans la direction d'avancement du véhicule.

Par ailleurs, une partie du bruit généré par la sculpture d'une bande de roulement vient du glissement longitudinal des sous-blocs de matière lorsqu'ils quittent le sol. Ce glissement provoque un bruit communément appelé «chuintement». L'invention permet de diminuer ce bruit de chuintement.

Selon un exemple de réalisation de l'invention, l'angle d'inclinaison α est compris entre 3 et 30 degrés.

Selon une variante, α est compris entre 5 et 15 degrés.

Ces valeurs de l'angle d'inclinaison permettent de réduire l'usure de type dents de scie dans la longueur du bloc allongé. En effet, il a été constaté par les inventeurs que si l'angle d'inclinaison α est en dessous de 3 degrés, son effet sur la réduction de l'usure en dents de scie peut ne pas être suffisant. De plus, au-delà de 30 degré, le bloc allongé peut être fragilisé.

Selon une variante, le bloc allongé comporte au moins deux découpures obliques présentant des angles d'inclinaison a, α' dans la profondeur de la bande de roulement, différents.

Chaque paire de découpures successive dans le bloc allongé délimitent un sous-bloc d'une longueur donnée, pouvant varier d'un sous-bloc à l'autre. Par ailleurs, l'usure d'un sous-bloc varie en fonction de sa longueur.

Ainsi, en donnant des angles différents pour des sous-blocs situés sur le même bloc allongé, on ajuste l'usure irrégulière en fonction de la longueur de chaque sous-bloc, de sorte que l'usure des sous-blocs soit globalement uniforme.

Selon un exemple de réalisation, au moins une découpure présente une profondeur radiale maximale comprise entre 50% et 100% de la hauteur de la première et/ou la deuxième paroi latérale.

Ceci permet d'augmenter la rigidité longitudinale de la bande de roulement, ce qui améliore le freinage sur sol sec.

La profondeur radiale de découpure est mesurée par rapport à un plan tangent à la bande de roulement au niveau de la découpure. Ce plan tangent étant perpendiculaire au plan radial passant par le centre de la découpure.

Selon une variante, au moins une découpure présente une profondeur radiale maximale comprise entre 80% et 95% de la hauteur de la première et/ou la deuxième paroi latérale. Ceci améliore encore plus le freinage sur sol mouillé.

Selon un autre exemple de réalisation, au moins une découpure présente au moins à une première profondeur P1 à partir de la surface de contact un premier angle d'inclinaison al et à une deuxième profondeur P2 un deuxième angle d'inclinaison α2 différent dudit premier angle d'inclinaison al, α2 étant supérieur à al.

A l'état neuf, le pneumatique peut être soumis à une usure intensive ayant une forme différente de l'usure en dents de scie, liée à une utilisation importante, par exemple des freinages répétés ou, une vitesse élevée avec passage de couple important. Cette usure intensive est d'autant plus importante que la bande de roulement est épaisse.

En donnant un plus faible angle α au niveau de la bande de roulement à l'état neuf, on limite les conséquences de l'usure intensive sur le pneumatique. Avec l'usure de la bande de roulement, cette usure intensive est moins importante du fait que l'épaisseur de la bande de roulement se réduit. C'est l'usure en dent de scie qui devient plus dominante. On donne alors un angle alpha plus prononcé à la découpure.

Selon une variante, l'angle α présente une variation continue (dite « *smooth* » en anglais) dans la profondeur de la bande de roulement.

Ainsi, on adapte de manière continue l'angle d'inclinaison α en profondeur et on évite d'avoir des discontinuités d'angles. On limite aussi l'apparition de fissurations liées aux changements d'angle.

Selon un exemple de réalisation, chaque découpure a sa première extrémité débouchant dans la première paroi latérale et sa deuxième extrémité débouchant dans la seconde paroi latérale.

Ceci rend le pneu plus souple et se met mieux à plat. En conséquence, l'énergie dissipée à chaque tour de roue diminue.

Selon une variante, chaque découpure a sa première extrémité débouchant dans la première paroi latérale et sa deuxième extrémité ne débouchant pas dans la seconde paroi latérale ou que chaque découpure a sa première extrémité débouchant dans la deuxième paroi latérale et sa deuxième extrémité ne débouchant pas dans la première paroi latérale.

Ceci permet de rigidifier localement le bloc allongé. En conséquence, il résiste mieux aux usures agressives, qui sont par exemple causées par des sollicitations fortes, des freinages répétés ou une vitesse élevée avec passage de couple important en ligne droite.

Selon une variante, pour une première découpure et une deuxième découpure qui se succèdent longitudinalement dans le bloc allongé et ayant chacune une première extrémité débouchant dans la première paroi latérale, la deuxième extrémité de la première découpure débouche dans la deuxième paroi latérale et la deuxième extrémité de la deuxième découpure ne débouche pas dans la deuxième paroi latérale.

Les découpures débouchant sur la seconde paroi latérale forment des sous-blocs dans le bloc allongé. Chaque sous-bloc comprend ainsi une découpure qui ne débouche pas sur cette seconde paroi latérale. On favorise ainsi la mise à plat du bloc allongé.

Selon une autre variante, pour une première découpure et une deuxième découpure qui se succèdent longitudinalement dans le bloc allongé, la première extrémité de la première découpure débouche dans la première paroi latérale et la deuxième extrémité de la deuxième découpure débouche dans la deuxième paroi latérale, la deuxième extrémité de la première découpure et la première extrémité de la deuxième découpure ne débouchent ni dans la première paroi latérale ni dans la deuxième paroi latérale.

Ainsi, on assure la présence d'un pont de gomme continue le long du bloc allongé. En conséquence le centre du bloc allongé est plus rigide et résiste donc mieux aux usures agressives.

Un autre avantage, réside dans le fait que de cette manière on crée une symétrie miroir, particulièrement intéressante lorsque le bloc allongé est positionné au centre du pneumatique.

Avantageusement, les découpures sont partiellement ou totalement chanfreinées sur la surface contact. Ceci permet d'améliorer les performances du pneumatique en freinage sur sol sec.

Avantageusement, chaque couple de découpures successives délimite dans ledit bloc allongé un sous-bloc ayant un pas S, et en ce qu'au moins deux sous-blocs du bloc allongé ont deux pas différents.

Le fait que les sous-blocs présentent des dimensions différentes dans la bande de roulement permet d'améliorer le brouillage du signal sonore émis par la sculpture du pneumatique. En conséquence, le bruit émis par le pneumatique est réduit.

Avantageusement, ledit bloc allongé comporte au moins deux sous-blocs allongés, qui sont, avantageusement, adjacents.

Selon un exemple de réalisation, au moins une découpure d'un sous-Bloc allongé présente un premier angle d'inclinaison α3 et au moins une découpure de l'autre sous-bloc allongé présente un deuxième angle d'inclinaison α4 différent dudit premier angle d'inclinaison α3.

Ceci permet d'équilibrer l'usure entre deux sous-blocs adjacents. Ainsi, les sous-blocs allongés s'usent à la même vitesse quelle que soit leur position sur la bande de roulement.

Selon une forme de réalisation non conforme à l'invention, la découpure est une rainure. On améliore ainsi l'écoulement de l'eau hors de la bande de roulement lorsque le pneumatique roule sur un sol mouillé. Selon l'invention, la découpure est une incision. On améliore ainsi l'adhérence de la bande de roulement sur sol mouillé sans trop diminuer la rigidité globale du bloc allongé.

Avantageusement, partir d'une certaine profondeur dans la bande de roulement, les incisions s'élargissent au moins partiellement.

Avantageusement, en s'élargissant les incisions forment des rainures. On combine ainsi, l'avantage des incisions avant une certaine usure du pneumatique, avec l'avantage des rainures lorsque le pneumatique est usé.

Avantageusement, tout ou partie des découpures comportent au moins un plot de rétrécissement faisant protubérance à partir d'une paroi de la découpure.

Ceci permet de réduire le bruit le émis par le pneu lors d'un roulage.

Selon une forme de réalisation non conforme à l'invention, la pluralité de découpures comporte des rainures et des incisions. Ainsi, on combine également l'avantage procuré par les rainures avec l'avantage procuré par les incisions.

Dans une variante, la bande de roulement comporte une pluralité de blocs allongés comportant des découpures, chaque découpure présente un angle d'inclinaison α. Ceci rend le pneu comportant cette bande de roulement davantage silencieux, avec une usure en dents de scie davantage réduite.

L'invention porte aussi sur un pneu comportant une bande de roulement telle que décrite précédemment.

### BREVE DESCRIPTION DES DESSINS

D'autres caractéristiques et avantages de l'invention ressortiront de la description suivante, donnée à titre d'exemple, sans caractère limitatif, en regard des dessins annexés dans lesquels :
- la figure 1 représente schématiquement une vue partielle d'une bande de roulement, selon un premier exemple de réalisation de l'invention;
- la figure 2 représente schématiquement une vue agrandie d'une découpure du bloc de la figure 1;
- les figures 3 à 11 représentent schématiquement des variantes de l'exemple de réalisation montré en figure 1 ;
- la figure 12 représente schématiquement une coupe circonférentielle d'une bande de roulement qui n'est pas selon l'invention ;
- la figure 13 est un zoom sur une découpure de la bande de roulement de la figure 12 ;
- la figure 14 représente schématiquement une coupe circonférentielle d'une bande de roulement selon une variante qui n'est pas selon l'invention ;
- la figure 15 est un zoom sur une découpure de la bande de roulement de la figure 14 ;
- les figures 16 à 18 représentent schématiquement des coupes circonférentielles d'autres variantes de la bande de roulement de la figure 12,lesdites variantes étant selon l'invention.

### DESCRIPTION DETAILLEE

Dans la description qui suivre, des éléments sensiblement identiques ou similaires seront désignés par des références identiques.

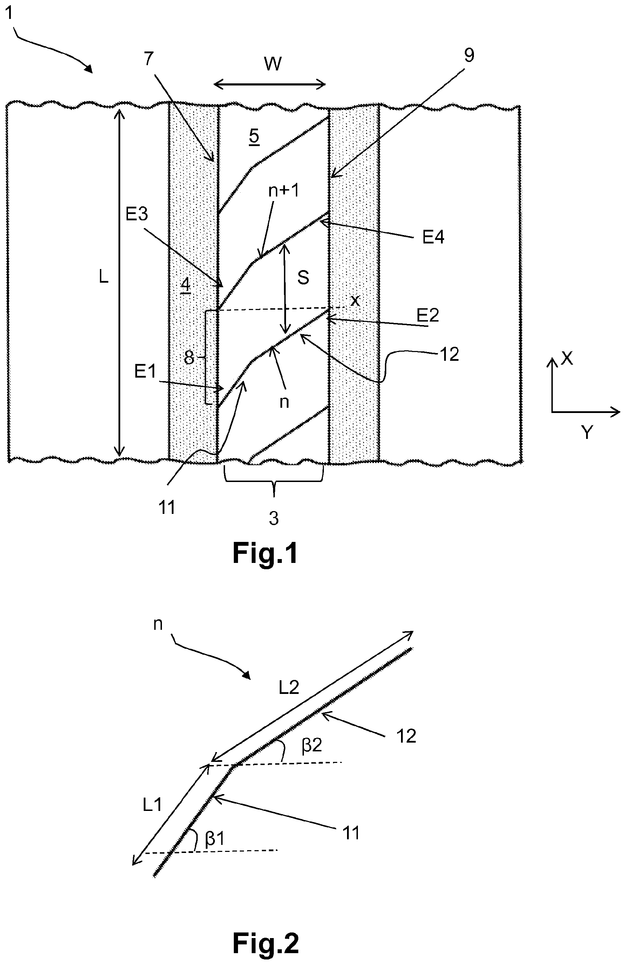

La figure 1 représente une vue partielle d'une bande de roulement 1 d'un pneumatique selon un premier mode de réalisation de l'invention.

La bande de roulement 1 comporte au moins un bloc 3 en matériau caoutchoutique. Le bloc 3 est ici délimité par deux rainures 4 qui ont été ici grisées sur la figure 1 pour favoriser la compréhension de l'invention. Plus particulièrement, le bloc 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc 3 a l'allure d'une bande s'étendant selon une direction circonférentielle X. Cette bande peut s'étendre sur toute la circonférence du pneumatique. En variante, cette bande s'étend sur une partie seulement de cette circonférence.

De plus, le bloc 3 comporte une surface de contact 5 destinée à venir en contact avec un sol et une première paroi latérale 7 et une seconde paroi latérale 9 délimitant cette surface de contact 5.

En outre, le bloc 3 comporte une pluralité de découpures n, n+1, c'est à dire des incisions, débouchant sur la surface de contact 5. Les découpures n, n+1 s'étendent selon une direction oblique en débouchant avec leurs premières extrémités respectives E1, E3 sur la première paroi latérale 7 et par leurs deuxièmes extrémités respectives E2, E4 sur la seconde paroi latérale 9.

Les découpures du bloc 3 sont ici orientées dans le même sens, c'est-à-dire que les découpures s'étendent de la première paroi latérale 7 vers la seconde paroi latérale 9 selon un sens positif en X et en Y. Ces découpures sont réparties sur la surface de contact 5 du bloc 3 de sorte que lorsqu'une découpure n atteint la seconde paroi latérale 9, une autre découpure n+1 débute à partir de la première paroi latérale 7, sensiblement au même niveau sur le bloc 3.

Par « au même niveau x » sur le bloc, on entend une position circonférentielle x déterminée sur ce bloc. En outre, par « sensiblement », on entend qu'il peut exister un faible décalage entre la position circonférentielle des incisions n, n+1. Ce décalage est cependant limité. Il est inférieur à 5 % du pas S du sous-bloc 8 délimité par les deux découpures n et n+1. Pour évaluer la présence ou non d'un tel décalage, on utilisera la notion de fibre neutre associée à chaque découpure.

De plus, chaque découpure n comporte au moins une première partie 11 et une seconde partie 12, la première partie de découpure 11 ayant selon une direction transversale une longueur L1 en faisant un angle β1 avec cette direction transversale et la seconde partie de découpure 12 ayant une longueur L2 en faisant un angle β2, avec L1 < L2 et β1 > β2.

Sur l'exemple de découpure illustré par la figure 2, l'angle β2 est supérieur à 0° et inférieur à 40° et l'angle β1 est supérieur ou égal à 65° et inférieur ou égal à 90°.

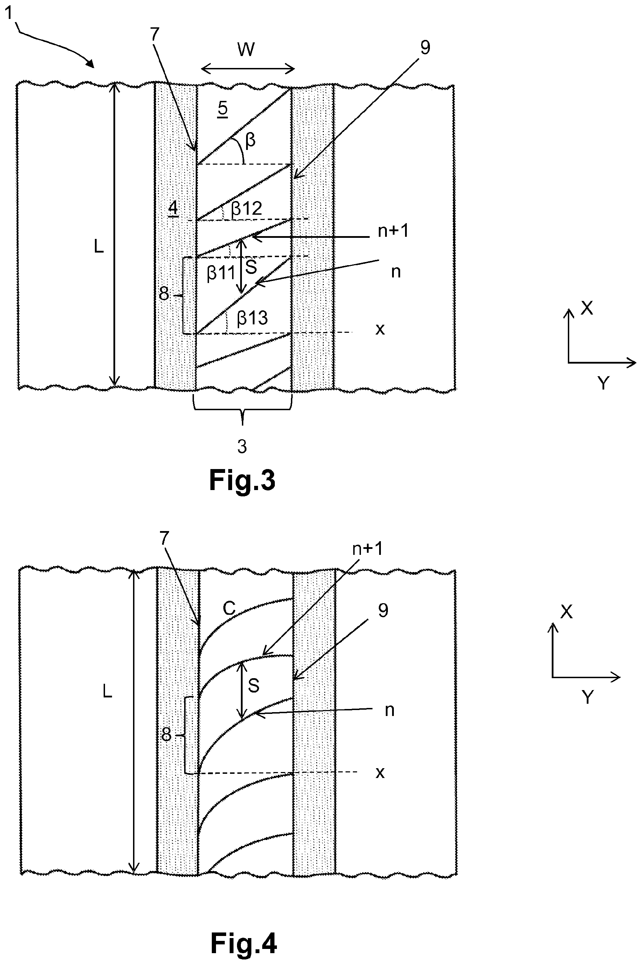

La figure 3 illustre un deuxième exemple de réalisation dans lequel les découpures, c'est à dire des incisions, sont rectilignes sur la surface de contact 5 du bloc allongé 3. Chaque découpure forme un angle β avec la direction circonférentielle X. Cet angle β est variable, par exemple, dans l'exemple illustré il prend trois valeurs β11, β12, β13 avec β11< β12< β13, ces valeurs β11, β12, β13 étant comprises entre 20° et 70°.

On notera que la forme des sous-blocs 8 est ici globalement trapézoïdale avec deux côtés parallèles et deux côtés non parallèles. Chaque sous-bloc 8 présente un pas S correspondant à une distance moyenne déterminée entre les deux côtés non parallèles du sous-bloc 8. Du fait de la variation des valeurs de l'angle β le long de la circonférence du pneumatique, au moins deux des sous-blocs 8 présentent, sur la figure 3, des valeurs de pas S différentes et donc des configurations différentes.

La figure 4 présente une autre variante de réalisation dans laquelle les découpures n, n+1 débouchent sur la surface de contact 5 du bloc 3 allongé en formant des traces courbées de courbure C.

De la même manière que dans l'exemple de la figure 3, les incisions n, n+1 sont réparties sur la surface de contact 5 du bloc allongé 3 de sorte que lorsqu'une découpure n a atteint la seconde paroi latérale 9, une autre découpure n+1 débute à partir de la première paroi latérale 7, sensiblement au même niveau x sur le bloc allongé 3. Chaque sous-bloc 8 présente également un pas S, ce pas S correspondant à une distance moyenne déterminée entre les deux découpures délimitant ce sous-bloc 8.

On notera ici que la courbure C varie dans la direction circonférentielle X du pneumatique. Du fait de cette variation de courbure, au moins deux des sous-blocs 8 présentent des valeurs de pas S différentes et donc des configurations différentes.

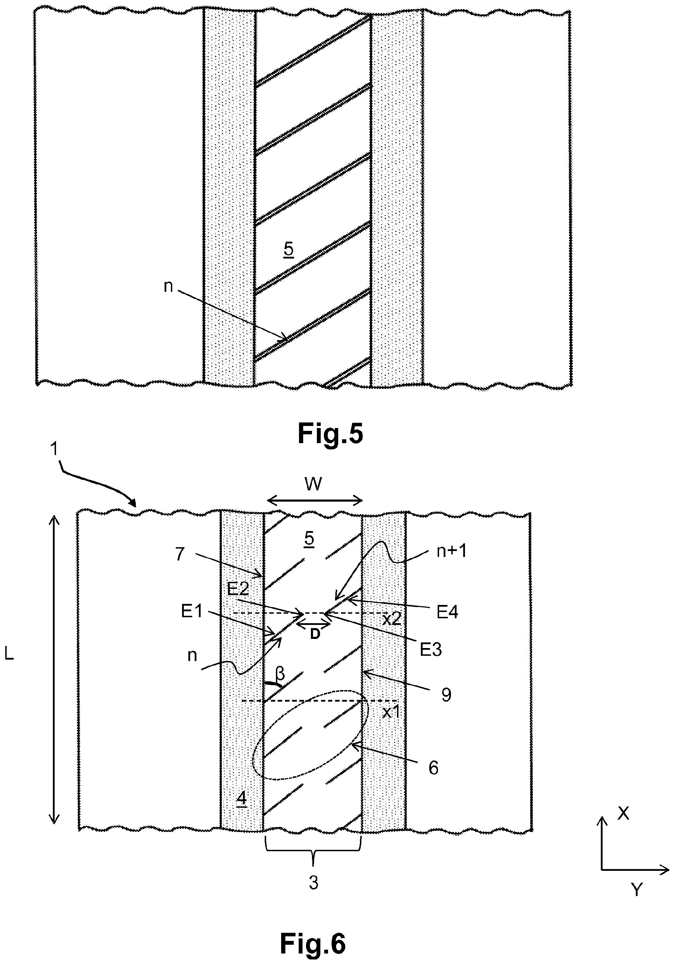

La figure 5 présente un autre exemple de réalisation dans lequel les découpures n, n+1 sont, en outre, partiellement ou totalement chanfreinées sur la surface de contact 5 du bloc allongé 3.

La figure 6 illustre un autre exemple de réalisation dans lequel les découpures sont organisées en ensemble 6 de découpures. Chaque ensemble 6 de découpures s'étend selon une direction oblique et comprend :
- une première découpure n comprenant une extrémité E1 débouchant dans la première paroi latérale 7 et une extrémité E2 ne débouchant pas dans la deuxième paroi latérale 9, et
- une deuxième découpure n+1 comprenant une extrémité E3 ne débouchant pas dans la première paroi latérale 7 et une extrémité E4 débouchant dans la deuxième paroi latérale 9.

Les ensembles de découpures 6 sont répartis sur la surface de contact 5 du bloc allongé 3 de sorte que lorsqu'un ensemble de découpure 6 atteint la seconde paroi latérale 9, un autre ensemble de découpure débute à partir de la première paroi latérale 7 sensiblement à un même niveau circonférentiel x1 sur le bloc allongé.

L'extrémité E2 de chaque première découpure n et l'extrémité E3 de chaque deuxième découpure n+1 de l'ensemble de découpure 6 sont situés sensiblement à un même niveau circonférentiel x2 dans le bloc allongé 3.

On notera que dans l'exemple de la figure 6, les découpures n, n+1 ne se recouvrent pas selon la direction transversale Y. Il existe en effet une distance D de gomme entre les deux extrémités E2 et E3. Cette distance D est par exemple égale à au moins à 10% de la largeur W du bloc allongé. On s'assure ainsi d'une continuité de gomme dans le bloc allongé, ce qui permet de maintenir une bonne rigidité globale dans ce bloc.

Les découpures n, n+1 atteignent la paroi du bloc allongé en formant un angle β.

Dans un exemple de réalisation non limitatif, l'angle β est supérieur ou égal à 55°.

Par ailleurs, dans une variante de réalisation, non illustrée, les découpures n, n+1 de l'ensemble de découpures 6 ont une forme courbée.

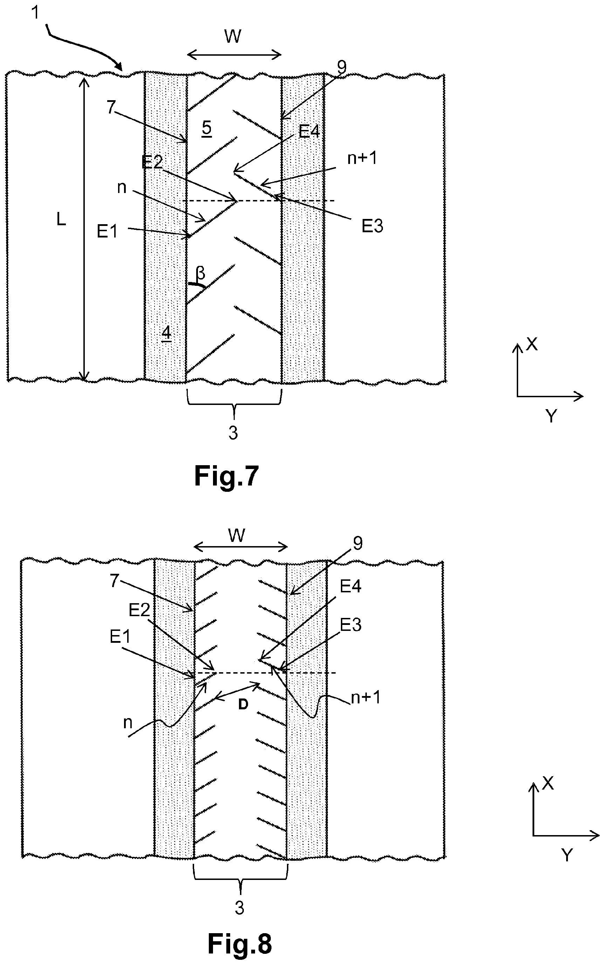

La figure 7 illustre encore un autre exemple de réalisation dans lequel le bloc allongé 3 comporte une pluralité de découpures obliques n, n+1 débouchant alternativement sur la première paroi latérale 7 ou sur la seconde paroi latérale 9 et s'étendant jusqu'à des extrémités de découpures E2, E4 qui ne débouchent pas sur les parois latérales 7, 9.

Les découpures n, n+1 sont réparties sur la surface de contact 5 de manière que lorsqu'une découpure n, dont l'extrémité E1 débouche dans première parois latérale 7, atteint son extrémité de découpure E2, l'extrémité E3 d'une autre découpure n+1 débute à partir de la seconde paroi latérale 9 où elle débouche, à un même niveau circonférentiel x sur le bloc allongé 3.

Ainsi, lorsqu'on projette les découpures n, n+1 selon la direction circonférentielle X, il n'y a pas de superposition de découpures selon cette direction circonférentielle X. De cette manière, on limite la variation du taux d'entaillement dans le bloc allongé 3 selon cette direction circonférentielle X.

On notera également que comme les extrémités E2 et E4 des découpures n, n+1 ne débouchent pas à la fois sur les deux parois latérales 7, 9, on s'assure d'une bonne rigidité globale du bloc allongé 3.

Les découpures n, n+1 atteignent leur paroi respective 7, 9 en formant un angle β avec la direction circonférentielle X.

Dans un exemple de réalisation non limitatif, l'angle β est supérieur ou égal à 55°.

Dans une variante non illustrée de l'exemple de réalisation de la figure 7, les découpures ont une forme courbée.

Dans une autre variante également non illustrée, on donne une longueur suffisante à au moins une des découpures n, n+1 de sorte qu'il y a superposition de ces découpures selon une projection transversale, c'est-à-dire selon la direction transversale Y.

A l'inverse, la figure 8 présente une variante dans laquelle les longueurs des découpures n, n+1 sont réduites. Les extrémités E2, E4 sont alors distantes d'une distance D. Cette distance D présente une composante transversale au moins égale à 10% de la largeur W du bloc allongé.

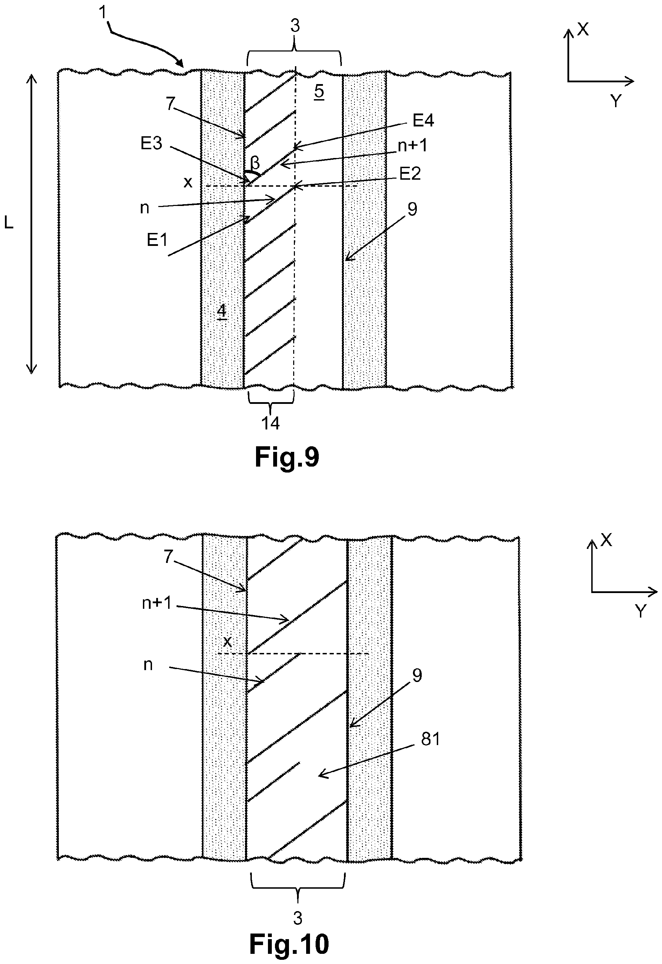

La figure 9 illustre un exemple de réalisation dans lequel le bloc allongé 3 comporte une série 14 de découpures obliques n, n+1 débouchant sur la première paroi latérale 7 et s'étendant jusqu'à des extrémités E2, E4 de découpures qui ne débouchent pas sur les parois latérales 7, 9. Les extrémités E2, E4 sont ici situées au niveau d'un plan médian de la bande de roulement.

Les découpures n, n+1 sont réparties sur la surface de contact 5 de sorte que lorsque la découpure n atteint son extrémité de découpure E2, une autre découpure n+1 débute à partir de la première paroi latérale 7, sensiblement à un même niveau x circonférentiel sur le bloc allongé 3.

Ainsi, lorsqu'on projette les découpures n, n+1 selon la direction circonférentielle X, il n'y a pas de superposition de découpures selon cette direction circonférentielle X. De cette manière, on limite la variation du taux d'entaillement dans le bloc allongé 3 selon cette direction circonférentielle.

On notera également que comme les découpures n, n+1 ne traversent pas le bloc allongé 3, on s'assure d'une bonne rigidité globale du bloc allongé 3.

Les extrémités E1, E3 des découpures n, n+1 débouchent sur la paroi 7 en formant un angle β avec la direction circonférentielle X dans le bloc allongé 3.

Dans un mode de réalisation non limitatif, l'angle β est supérieur ou égal à 55°.

La figure 10 présente une variante de réalisation de l'exemple de la figure 9 dans laquelle la découpure n+1 débouche sur la seconde paroi latérale 9 de manière que le bloc allongé 3 est formé par une pluralité de sous-blocs 81.

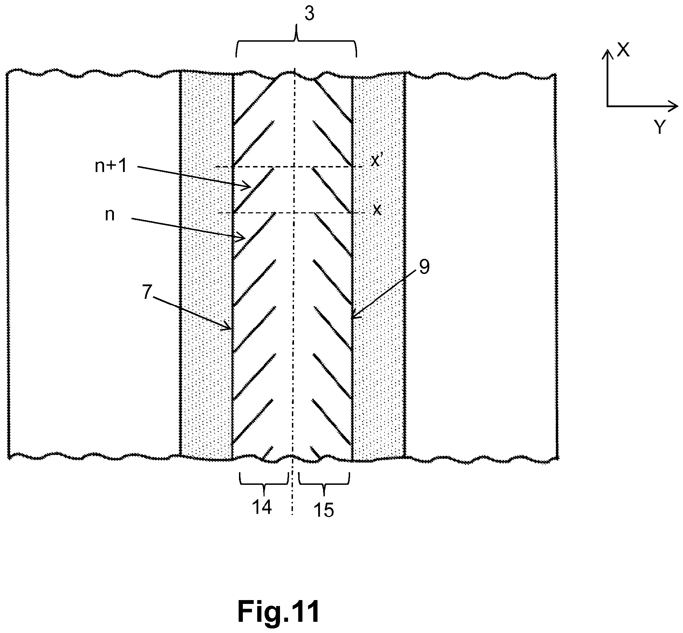

La figure 11 présente une variante de réalisation dans laquelle le bloc allongé 3 comporte une seconde série 15 de découpures. Les découpures de la seconde série 15 de découpures sont symétriques aux découpures n, n+1 de la première série de découpures 14, de manière que les extrémités des découpures sont alignées aux niveaux x et x', les unes par rapport aux autres.

Le taux d'entaillement sur la surface du bloc allongé est donc globalement constant le long de la direction circonférentielle.

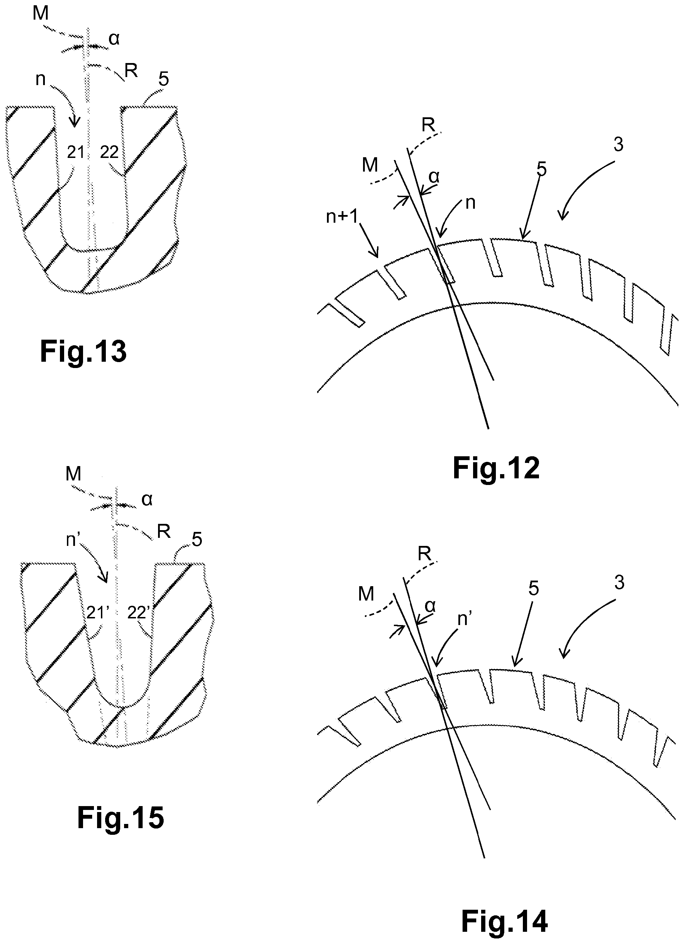

La figure 12 représente une coupe circonférentielle d'un pneu comportant une bande de roulement qui n'est pas selon l'invention, par exemple, telle que représentée par l'une des figure 1, 2 à 11. Plus précisément, la coupe est réalisée le long du bloc allongé 3 de manière que le plan de coupe passe par les découpures successives n, n+1.

La figure 13 est un zoom sur une découpure n. Comme cela se voit sur ces deux figures, chaque découpure n comporte deux parois 21, 22 parallèles. La découpure n présente en profondeur un plan médian M incliné d'un angle d'inclinaison α par rapport à un plan radial R passant par le centre de ladite découpure n.

La figure 14 représente une variante qui n'est pas selon l'invention et qui diffère de l'exemple de la figure 12 par le fait que chaque découpure n' présente en profondeur des parois 21', 22' non parallèles, formant sensiblement un V.

La figure 15 est un zoom sur une découpure n' de la figure 14.

Dans l'exemple de la figure 12, les découpures sont des rainures, c'est-à-dire que l'espace entre les parois 21, 22 ; 21', 22' est supérieure à 2 mm.

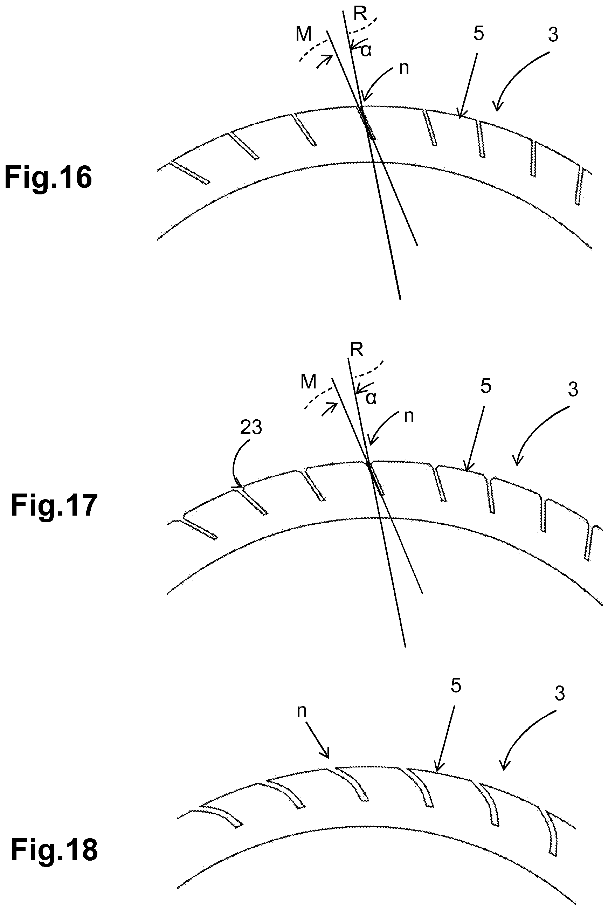

La figure 16 illustre une variante de l'exemple de réalisation représenté en figure 12, dans laquelle les découpures sont des incisions, c'est-à-dire que la distance entre les parois est inférieure ou égale à 2mm.

La figure 17 est une variante dans laquelle les parois de la découpure présentent chacune un chanfrein 23 à la surface de contact 5. La distance entre les parois correspond à celle des incisions montrées en figure 16, néanmoins cela peut aussi s'appliquer à des rainures.

La figure 18 représente une variante dans laquelle les parois de la découpure présentent un angle d'inclinaison qui varie en continu dans la profondeur.

Dans une variante non représentée, au moins une découpure présente à une première profondeur P1 à partir de la surface de contact 5 un premier angle d'inclinaison al et à une deuxième profondeur P2 un deuxième angle d'inclinaison α2 différent dudit premier angle d'inclinaison al.

Selon une application non limitative de l'invention, l'angle d'inclinaison α est compris entre 3 et 30 degrés.

Selon une variante, l'angle d'inclinaison α est compris entre 5 et 15 degrés.

Selon un mode de réalisation également non limitatif, au moins une découpure présente une profondeur radiale maximale comprise entre 60% et 100% de la hauteur de la première et/ou la deuxième paroi latérale 7, 9. Cette profondeur est mesurée à partir de la surface de contact 5.

Selon une variante, au moins une découpure présente une profondeur radiale maximale comprise entre 80% et 95% de la hauteur de la première et/ou de la deuxième paroi latérale 7, 9.

L'invention n'est pas limitée aux exemples décrits et représentés, diverses modifications peuvent y être apportées sans sortir de son cadre tel que défini par les revendications.

Par exemple, on peut varier les formes et longueurs des découpures. On peut utiliser les découpures complexes ayant des angles α et/ou des angles β différents pour améliorer encore plus les performances d'adhérence et réduire encore plus l'usure en dent de scie.

## Revendications

1. Bande de roulement pour pneumatique comportant au moins un bloc (3) allongé en matériau caoutchoutique de largeur W et de longueur L où L est d'au moins 5 fois W, ce bloc allongé s'étendant selon une direction circonférentielle (X) lorsque la bande de roulement (1) est montée sur le pneumatique, chaque bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité de découpures obliques successives (n, n+1) au nombre de N, et ayant chacune une première extrémité (E1, E3) et une deuxième extrémités (E2, E4), au moins l'une de la première extrémité (E1, E3) et de la deuxième extrémité (E2, E4), débouche sur la première ou la deuxième paroi latérale (7, 9) ; la bande de roulement étant **caractérisée :**
- **en ce que** les découpures (n, n+1) se succèdent longitudinalement sur la surface de contact (5) de manière qu'au moins l'une des extrémités (E1, E2) de l'une des découpures (n) est située à un même niveau circonférentiel x sur le bloc allongé (3) qu'une extrémité (E3, E4) d'une autre découpure (n+1) circonférentiellement adjacente à ladite une des découpures (n), un faible décalage entre la position circonférentielle des découpures (n, n+1) étant limité à 5% du pas entre les deux découpures (n, n+1) ;
- **en ce que** tout ou partie des découpures (n, n+1) présente un angle d'inclinaison α non nul dans la profondeur de la bande de roulement par rapport à une direction normale à ladite surface de la bande de roulement de sorte que la découpure est orientée dans la direction d'avancement du véhicule ;
- et **en ce que** chaque découpure (n, n+1) est une incision.

2. Bande de roulement selon la revendication 1, **caractérisée en ce que** l'angle d'inclinaison α est compris entre 3 et 30 degrés, de préférence entre 5 et 15 degrés.

3. Bande de roulement selon l'une quelconque des revendications 1 à 2, **caractérisée en ce que** le bloc allongé (3) comporte au moins deux découpures obliques présentant des angles d'inclinaison α différents, dans la profondeur de la bande de roulement.

4. Bande de roulement selon l'une des revendications 1 à 3, **caractérisée en ce qu'**au moins une découpure (n, n+1) présente une profondeur radiale maximale comprise entre 50% et 100% , de préférence entre 80% et 95%, de la hauteur de la première paroi latérale (7) et/ou la deuxième paroi latérale (9) .

5. Bande de roulement selon l'une des revendications 1 à 4, **caractérisée en ce qu'**au moins une découpure (n, n+1) présente au moins à une première profondeur P1 à partir de la surface de contact un premier angle d'inclinaison al et à une deuxième profondeur P2 un deuxième angle d'inclinaison α2 différent dudit premier angle d'inclinaison al.

6. Bande de roulement selon l'une des revendications 1 à 4, **caractérisée en ce que** l'angle α présente une variation continue dans la profondeur de la bande de roulement.

7. Bande de roulement selon l'une des revendications 1 à 6, **caractérisée en ce que** chaque découpure (n) a sa première extrémité (E1) débouchant dans la première paroi latérale (7) et sa deuxième extrémité (E2) débouchant dans la seconde paroi latérale (9).

8. Bande de roulement selon l'une des revendications 1 à 6, **caractérisée en ce que** pour une première découpure (n) et une deuxième découpure (n+1) qui se succèdent longitudinalement dans le bloc allongé (3), la première découpure (n) a sa première extrémité (E1) débouchant dans la première paroi latérale (7) et sa deuxième extrémité ne débouchant pas dans la seconde paroi latérale (9) ou la deuxième découpure (n+1) a sa première extrémité (E3) débouchant dans la deuxième paroi latérale (9) et sa deuxième extrémité (E4) ne débouchant pas dans la première paroi latérale (7).

9. Bande de roulement selon l'une des revendications 1 à 6, **caractérisée en ce que** pour une première découpure (n) et une deuxième découpure (n+1) qui se succèdent longitudinalement dans le bloc allongé (3), et ayant chacune une première extrémité (E1, E3) débouchant dans la première paroi latérale (7), la deuxième extrémité (E2) de la première découpure (n) débouche dans la deuxième paroi latérale (9) et la deuxième extrémité (E4) de la deuxième découpure (n+1) ne débouche pas dans la deuxième paroi latérale (9).

10. Bande de roulement selon l'une des revendications 1 à 6, **caractérisée en ce que** pour une première découpure (n) et une deuxième découpure (n+1) qui se succèdent longitudinalement dans le bloc allongé (3), la première extrémité (E1) de la première découpure (n) débouche dans la première paroi latérale (7) et la deuxième extrémité (E4) de la deuxième découpure (n+1) débouche dans la deuxième paroi latérale (9), la deuxième extrémité (E2) de la première découpure (n) et la première extrémité (E3) de la deuxième découpure (n+1) ne débouchent ni dans la première paroi latérale (7) ni dans la deuxième paroi latérale (9).

11. Bande de roulement selon l'une des revendications 1 à 10, **caractérisée en ce que** les découpures (n, n+1) sont partiellement ou totalement chanfreinées sur la surface de contact.

12. Bande de roulement selon l'une des revendications 1 à 11, **caractérisée en ce que** chaque couple de découpures successives (n, n+1) délimite dans ledit bloc allongé (3) un sous-bloc ayant un pas S, et **en ce qu'**au moins deux sous-blocs du bloc allongé (3) ont deux pas (S1, S2) différents.

13. Bande de roulement selon l'une des revendications 1 à 11, **caractérisée en ce que** ledit bloc allongé (3) comporte au moins deux sous-blocs allongés.

14. Bande de roulement selon la revendication 13, **caractérisée en ce qu'**au moins une découpure d'un sous-Bloc allongé présente un premier angle d'inclinaison α3 dans la profondeur de la bande de roulement et au moins une découpure de l'autre sous-bloc allongé présente un deuxième angle d'inclinaison α4 dans la profondeur de la bande de roulement différent dudit premier angle d'inclinaison α3.

15. Pneu **caractérisé en ce qu'**il possède une bande de roulement (1) selon l'une des revendications 1 à 14.

## Patentansprüche

1. Laufstreifen für einen Luftreifen, der mindestens einen langgestreckten Block (3) aus Kautschukmaterial einer Breite W und einer Länge L aufweist, wobei L mindestens das Fünffache von W ist, wobei dieser langgestreckte Block sich gemäß einer Umfangsrichtung (X) erstreckt, wenn der Laufstreifen (1) auf den Luftreifen montiert ist, wobei jeder langgestreckte Block (3) eine Kontaktfläche (5), die dazu bestimmt ist, mit einem Boden in Kontakt zu kommen, und eine erste Seitenwand (7) und eine zweite Seitenwand (9) aufweist, die diese Kontaktfläche (5) begrenzen, wobei der langgestreckte Block (3) eine Vielzahl von aufeinanderfolgenden schrägen Ausschnitten (n, n+1) in einer Anzahl von N aufweist, und die je ein erstes Ende (E1, E3) und ein zweites Ende (E2, E4) haben, wobei mindestens eines vom ersten Ende (E1, E3) und vom zweiten Ende (E2, E4) auf der ersten oder der zweiten Seitenwand (7, 9) mündet; wobei der Laufstreifen **dadurch gekennzeichnet ist:**
- **dass** die Ausschnitte (n, n+1) der Länge nach auf der Kontaktfläche (5) so aufeinander folgen, dass mindestens eines der Enden (E1, E2) eines der Ausschnitte (n) sich im gleichen Umfangsbereich x auf dem langgestreckten Block (3) befindet wie ein Ende (E3, E4) eines anderen Ausschnitts (n+1), der dem einen der Ausschnitte (n) in Umfangsrichtung benachbart ist, wobei ein geringer Versatz zwischen der Umfangsposition der Ausschnitte (n, n+1) auf 5% der Teilung zwischen den zwei Ausschnitten (n, n+1) begrenzt ist;
- **dass** alle oder ein Teil der Ausschnitte (n, n+1) einen Neigungswinkel α ungleich Null in der Tiefe des Laufstreifens bezüglich einer Richtung normal zur Fläche des Laufstreifens haben, so dass der Ausschnitt in der Fortbewegungsrichtung des Fahrzeugs ausgerichtet ist;
- und **dass** jeder Ausschnitt (n, n+1) ein Einschnitt ist.

2. Laufstreifen nach Anspruch 1, **dadurch gekennzeichnet, dass** der Neigungswinkel α zwischen 3 und 30 Grad, vorzugsweise zwischen 5 und 15 Grad, liegt.

3. Laufstreifen nach einem der Ansprüche 1 bis 2, **dadurch gekennzeichnet, dass** der langgestreckte Block (3) mindestens zwei schräge Ausschnitte aufweist, die unterschiedliche Neigungswinkel α in der Tiefe des Laufstreifens aufweisen.

4. Laufstreifen nach einem der Ansprüche 1 bis 3, **dadurch gekennzeichnet, dass** mindestens ein Ausschnitt (n, n+1) eine maximale radiale Tiefe zwischen 50% und 100%, vorzugsweise zwischen 80% und 95%, der Höhe der ersten Seitenwand (7) und/oder der zweiten Seitenwand (9) aufweist.

5. Laufstreifen nach einem der Ansprüche 1 bis 4, **dadurch gekennzeichnet, dass** mindestens ein Ausschnitt (n, n+1) mindestens in einer ersten Tiefe P1 ausgehend von der Kontaktfläche einen ersten Neigungswinkel α1 und in einer zweiten Tiefe P2 einen zweiten Neigungswinkel α2 anders als der erste Neigungswinkel α1 aufweist.

6. Laufstreifen nach einem der Ansprüche 1 bis 4, **dadurch gekennzeichnet, dass** der Winkel α eine stufenlose Veränderung in der Tiefe des Laufstreifens aufweist.

7. Laufstreifen nach einem der Ansprüche 1 bis 6, **dadurch gekennzeichnet, dass** das erste Ende (E1) jedes Ausschnitts (n) in der ersten Seitenwand (7) und sein zweites Ende (E2) in der zweiten Seitenwand (9) mündet.

8. Laufstreifen nach einem der Ansprüche 1 bis 6, **dadurch gekennzeichnet, dass** für einen ersten Ausschnitt (n) und einen zweiten Ausschnitt (n+1), die der Länge nach im langgestreckten Block (3) aufeinander folgen, das erste Ende (E1) des ersten Ausschnitts (n) in der ersten Seitenwand (7) mündet und sein zweites Ende nicht in der zweiten Seitenwand (9) mündet, oder das erste Ende (E3) des zweiten Ausschnitts (n+1) in der zweiten Seitenwand (9) mündet und sein zweites Ende (E4) nicht in der ersten Seitenwand (7) mündet.

9. Laufstreifen nach einem der Ansprüche 1 bis 6, **dadurch gekennzeichnet, dass** für einen ersten Ausschnitt (n) und einen zweiten Ausschnitt (n+1), die der Länge nach im langgestreckten Block (3) aufeinander folgen, und deren jeweils erstes Ende (E1, E3) in der ersten Seitenwand (7) mündet, das zweite Ende (E2) des ersten Ausschnitts (n) in der zweiten Seitenwand (9) mündet und das zweite Ende (E4) des zweiten Ausschnitts (n+1) nicht in der zweiten Seitenwand (9) mündet.

10. Laufstreifen nach einem der Ansprüche 1 bis 6, **dadurch gekennzeichnet, dass** für einen ersten Ausschnitt (n) und einen zweiten Ausschnitt (n+1), die der Länge nach im langgestreckten Block (3) aufeinander folgen, das erste Ende (E1) des ersten Ausschnitts (n) in der ersten Seitenwand (7) mündet und das zweite Ende (E4) des zweiten Ausschnitts (n+1) in der zweiten Seitenwand (9) mündet, wobei das zweite Ende (E2) des ersten Ausschnitts (n) und das erste Ende (E3) des zweiten Ausschnitts (n+1) weder in der ersten Seitenwand (7) noch in der zweiten Seitenwand (9) münden.

11. Laufstreifen nach einem der Ansprüche 1 bis 10, **dadurch gekennzeichnet, dass** die Ausschnitte (n, n+1) teilweise oder vollständig auf der Kontaktfläche abgeschrägt sind.

12. Laufstreifen nach einem der Ansprüche 1 bis 11, **dadurch gekennzeichnet, dass** jedes Paar von aufeinanderfolgenden Ausschnitten (n, n+1) im langgestreckten Block (3) einen Teilblock mit einer Teilung S begrenzt, und dass mindestens zwei Teilblöcke des langgestreckten Blocks (3) zwei unterschiedliche Teilungen (S1, S2) haben.

13. Laufstreifen nach einem der Ansprüche 1 bis 11, **dadurch gekennzeichnet, dass** der langgestreckte Block (3) mindestens zwei langgestreckte Teilblöcke aufweist.

14. Laufstreifen nach Anspruch 13, **dadurch gekennzeichnet, dass** mindestens ein Ausschnitt eines langgestreckten Teilblocks einen ersten Neigungswinkel α3 in der Tiefe des Laufstreifens aufweist und mindestens ein Ausschnitt des anderen langgestreckten Teilblocks einen zweiten Neigungswinkel α4 in der Tiefe des Laufstreifens anders als der erste Neigungswinkel α3 aufweist.

15. Reifen, **dadurch gekennzeichnet, dass** er einen Laufstreifen (1) nach einem der Ansprüche 1 bis 14 besitzt.

## Claims

1. A tread for a tire comprising at least one elongated block (3) of rubber material of width W and length L, L being at least five times W, this elongated block extending in a circumferential direction (X) when the tread ( 1) is laid on the tire, each elongated block (3) having a contact surface (5) intended to come into contact with a ground and a first sidewall (7) and a second sidewall (9), delimiting this contact surface (5), the elongated block (3) having a plurality of successive oblique cutouts (n, n+1) N in number, each having a first end (E1, E3) and a second end (E2, E4), at least one of the first end (E1, E3) and the second end (E2, E4) opening onto the first or second sidewall (7, 9); the tread being **characterized:**
- **in that** the cutouts (n, n+1) follow one another longitudinally on the contact surface (5), so that at least one of the ends (E1, E2) of one of the cutouts (n) , is located at the same circumferential level x on the elongated block (3), as one end (E3, E4) of another cutout (n+1) circumferentially adjacent to said one of the cutouts (n), a small offset , between the circumferential position of the cutouts (n, n+1) being limited to 5% of the pitch between the two cutouts (n, n+1);
- in in that all or part of the cutouts (n, n+1) has a non-zero angle of inclination α, in the depth of the tread with respect to a direction normal to the said surface of the tread, so that the cutout is oriented in the direction of travel of the vehicle;
- and **in that** every cutout (n, n+1) is an incision.

2. Tread according to claim 1, **characterized in that** the angle of inclination α is between 3 and 30 degrees, preferably between 5 and 15 degrees.

3. Tread according to one of claims 1 to 2, **characterized in that** the elongated block (3) has at least two oblique cutouts which have different angles of inclination α in the depth of the tread.

4. Tread according to one of Claims 1 to 3, **characterized in that** at least one cutout (n, n+1) has a maximum radial depth of between 50% and 100%, preferably between 80% and 95%, of the height of the first side wall (7) and/or the second side wall (9).

5. Tread according to one of claims 1 to 4, **characterized in that** at least one cutout (n, n+1) has, at least at a first depth P1, from the contact surface, a first angle of inclination α1, and at a second depth P2, a second angle of inclination α2 different from said first angle of inclination α1.

6. Tread according to one of claims 1 to 4, **characterized in that** the angle α has a continuous variation in the depth of the tread.

7. Tread according to one of Claims 1 to 6, **characterized in that** the first end (E1) of each cutout (n) opens in the first sidewall (7) and its second end (E2) in the second sidewall (9).

8. Tread according to one of claims 1 to 6, **characterized in that** for a first cutout (n) and a second cutout (n+1) which follow one another longitudinally in the elongated block (3), the first cutout (n) has its first end (E1) opening into the first side wall (7), and its second end not opening into the second side wall (9), or the second cutout (n+1) has its first end ( E3) opening into the second side wall (9), and its second end (E4) not opening into the first side wall (7).

9. Tread according to one of claims 1 to 6, **characterized in that** for a first cutout (n) and a second cutout (n+1) which follow one another longitudinally in the elongated block (3), and each having a first end (E1, E3) opening into the first side wall (7), the second end (E2) of the first cutout (n) opening into the second side wall (9) and the second end (E4) of the second cutout (n+1) does not open into the second side wall (9).

10. Tread according to one of claims 1 to 6, **characterized in that** for a first cutout (n), and a second cutout (n+1) which follow one another longitudinally in the elongated block (3), the first end (E1) of the first cutout (n) opens into the first side wall (7), and the second end (E4) of the second cutout (n+1) opens into the second side wall (9), the second end (E2) of the first cutout (n), and the first end (E3) of the second cutout (n+1) does not open out either into the first side wall (7) or into the second side wall (9).

11. Tread according to one of Claims 1 to 10, **characterized in that** the cutouts (n, n+1) are partially or completely chamfered on the contact surface.

12. Tread according to one of claims 1 to 11, **characterized in that** each pair of consecutive cutouts (n, n+1) in the elongated block (3) delimits a sub-block with a pitch S, and that at least two sub-blocks of the elongated block (3) have two different pitches (S1, S2).

13. Tread according to one of claims 1 to 11, **characterized in that** the elongated block (3) has at least two elongated sub-blocks.

14. Tread according to claim 13, **characterized in that** at least one cutout of an elongated sub-block has a first angle of inclination α3 in the depth of the tread and at least one cutout of the another elongated sub-block has a second angle of inclination α4 in the depth of the tread 10 different from said first angle of inclination α3.

15. Tire, **characterized in that** it has a tread (1) according to any one of claims 1 to 14.
